# EUROPEAN PATENT SPECIFICATION

(11) **EP 4 255 227 B1**
(45) Date of publication and mention of the grant of the patent: **22.05.2024**
(21) Application number: 21834890.2
(22) Date of filing: 02.12.2021
(51) Int. Cl.: A24C 5/32, A24C 5/47, A24C 5/18, B33Y 80/00

(54) **OPERATING MACHINE FOR PROCESSING SMOKING ARTICLES WITH A PNEUMATIC COMPONENT MADE USING ADDITIVE MANUFACTURING**
BETRIEBSMASCHINE ZUR VERARBEITUNG VON RAUCHARTIKELN MIT EINER MITTELS GENERATIVER FERTIGUNG HERGESTELLTEN PNEUMATISCHEN KOMPONENTE
MACHINE D'EXPLOITATION POUR TRAITER DES ARTICLES À FUMER AVEC UN COMPOSANT PNEUMATIQUE FABRIQUÉ À L'AIDE D'UNE FABRICATION ADDITIVE

(30) Priority: 02.12.2020 IT 202000029435
(43) Date of publication of application: 11.10.2023
(60) Divisional application: 24151100.5
(73) Proprietor: G.D SOCIETA' PER AZIONI, 40133 Bologna (IT)
(72) Inventor: FERIOLI, Michele, 40133 Bologna (IT); BALOTTA, Stefano, 40133 Bologna (IT); LEONI, Francesco, 40133 Bologna (IT); GAMBERINI, Giuliano, 40133 Bologna (IT)
(74) Representative: Studio Torta S.p.A.
(86) International application number: PCT/IB2021/061248
(87) International publication number: WO 2022/118250

(56) References cited:
- DE-B4-102009 009 829
- US-B2- 10 568 354

## Description

### CROSS-REFERENCE TO RELATED APPLICATIONS

This patent application claims priority from Italian patent application no. 102020000029435 filed on December 2, 2020.

### TECHNICAL FIELD

This invention relates to an operating machine for processing smoking articles, for example a wrapping machine for producing cigarette packets, a packing machine for producing cigarettes or cigarette filters, or a filter application machine for applying filters to cigarettes.

### PRIOR ART

An operating machine for processing smoking articles comprises numerous components assembled together.

Some of these components are pneumatic, or they have, on their outer surface, holes through which (more frequently) suction is generated to hold an element being processed in contact with the outer surface of the component or through which (more rarely) a puff of compressed air is generated to pneumatically push on an element being processed.

A pneumatic component generally comprises a series of holes made through the outer surface of the pneumatic component and a system of internal channels arranged at least partially inside a pneumatic component to distribute the sucking or the compressed air to the holes. Normally, and for simplicity of production, the channels (often formed from the solid using chip removal processing) have a straight progression with elbow curves (i.e., forming a 90° angle); in any case, these regular channel shapes, imposed by the necessity of manufacturing without excessive complications, is decisively challenging in terms of fluid dynamics, i.e. it entails the loss of significant charges leading to decidedly unfavourable energy efficiency (i.e. to produce relatively limited suction or blowing, a lot of power is needed and, thus, it is necessary to consume a significant amount of energy).

The patent application DE102009009829B4 describes a method for manufacturing a piece formed for a cigarette packaging machine; the formed piece comprises a base body on which printed parts with surfaces in contact with the materials being processed are made using a laser ray.

The patent application WO 2017/058 237 A1 discloses a solenoid valve body of hardened stainless steel made by additive manufacturing.

### DESCRIPTION OF THE INVENTION

The purpose of this invention is to overcome the above-mentioned drawbacks, i.e., to provide an operating machine for processing smoking articles that is free of the drawbacks described above.

This purpose is achieved with an operating machine for processing smoking articles in accordance with the attached claims.

The claims describe preferred embodiments of this invention forming an integral part of this description.

### BRIEF DESCRIPTION OF THE DRAWINGS

This invention will now be described with reference to the attached drawings that illustrate some non-limiting embodiments thereof, in which:
- Figure 1 is a schematic, front view of a filter application machine.
- Figure 2 is a schematic perspective view of a staggering drum (scaler) of the filter application machine in Figure 1 which is not part of the present invention;
- Figure 3 is a perspective view of a series of operating rings of the staggering drum in Figure 2;
- Figure 4 is a cross-section view of an operating ring of the staggering drum in Figure 2;
- Figures 5 and 6 are two different perspective views of a holding head of a separation drum of the filter application machine in Figure 1 which is not part of the present invention;
- Figure 7 is a longitudinal cross-section view of the holding head in Figures 5 and 6;
- Figures 8 and 9 are two different perspective views of a holding head of a conveyor drum of the filter application machine in Figure 1 which is not part of the present invention;
- Figure 10 is a perspective view of the holding head in Figures 8 and 9 with the internal, pneumatic channels highlighted;
- Figure 11 is a schematic, perspective view of a wrapping machine;
- Figure 12 is a perspective view of a sucking holding head of the filter application machine in Figure 11 which is not part of the present invention;
- Figure 13 is an additional perspective view of the sucking holding head in Figure 12;
- Figure 14 is a plan view of the sucking holding head in Figure 12;
- Figure 15 is a cross-section view along the line XV-XV of the sucking holding head in Figure 12;
- Figure 16 is a perspective view of a sucking pocket of a wrapping drum of the wrapping machine in Figure 11 according to the present invention;
- Figure 17 is a plan view of the sucking pocket in Figure 16;
- Figures 18 and 19 are two cross-section views along the lines XVIII-XVIII and IXX-IXX of the sucking pocket in Figure 16;
- Figure 20 is a schematic view, with parts removed for clarity, of a packaging machine for the production of smoking articles or of parts for smoking articles;
- Figure 21 is a perspective view of an initial part of a forming beam of the packaging machine in Figure 20 which is not part of the present invention; and
- Figure 22 is a perspective view in cross-section of the initial part in Figure 21.

### PREFERRED EMBODIMENTS OF THE INVENTION

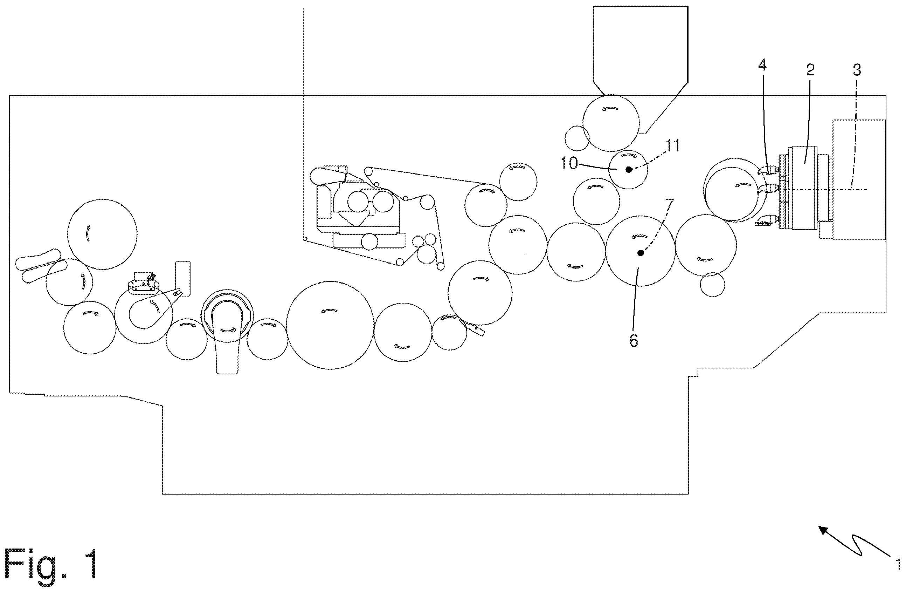

With reference to Figure 1, the reference number 1 indicates, as a whole, a filter application machine for applying filters to cigarettes (i.e., an operating machine for processing smoking articles).

The filter application machine 1 comprises multiple rotating conveyors, each of which is assembled so that it can rotate, with continuous motion, around a central rotation axis and supports, on the side, a series of sucking seats each of which is designed to hold at least one corresponding cigarette and/or at least one corresponding filter.

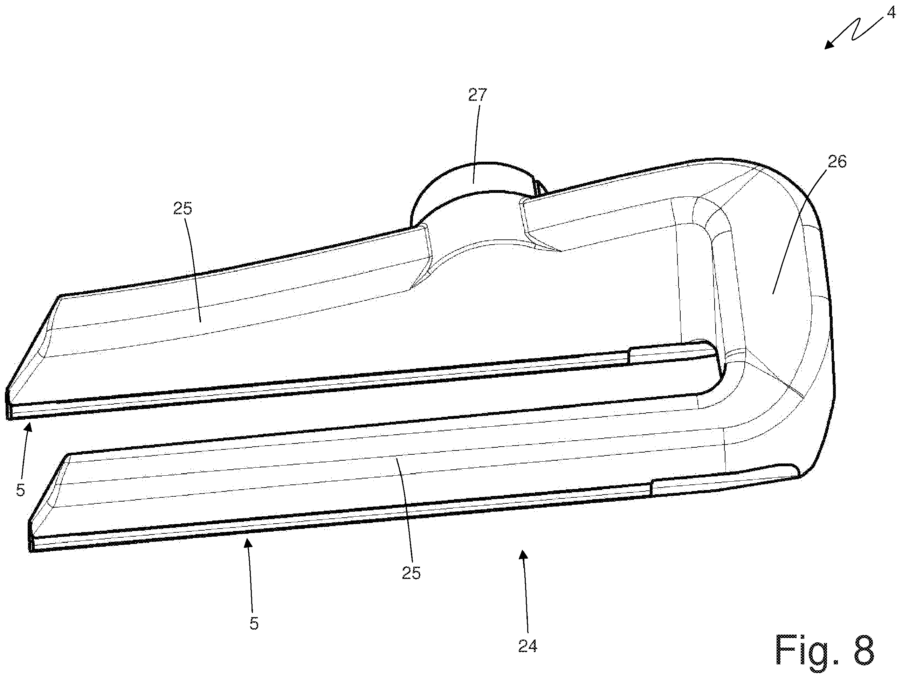

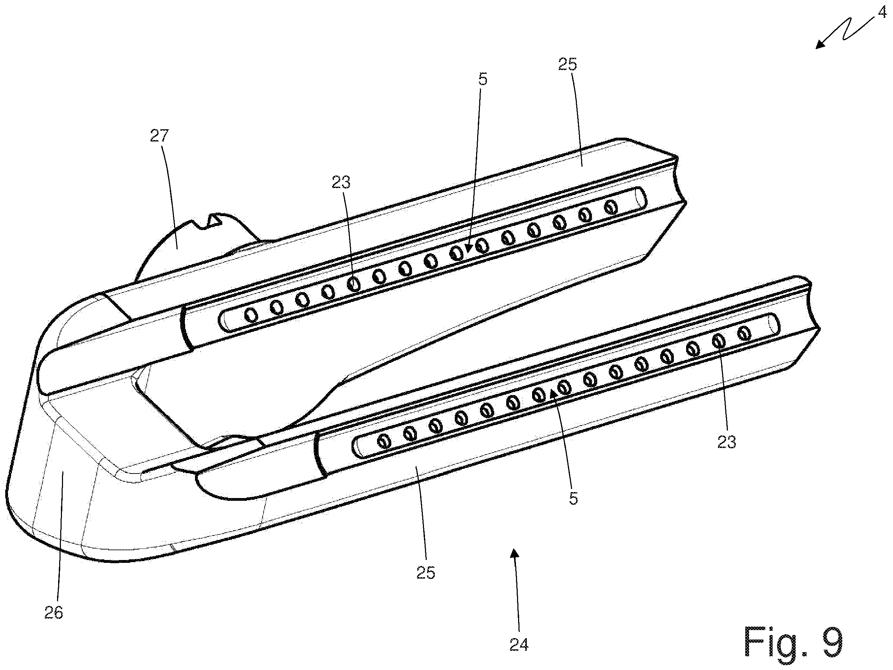

In particular, the filter application machine 1 comprises a transfer drum 2, (called a *"spider",* in the jargon) which is assembled so that it can rotate, with continuous motion, around a rotation axis 3 and supports multiple tools, each of which is mounted so that it rotates around the transfer drum 2 to rotate around a respective rotation axis parallel to the rotation axis 3 of the transfer drum 2 so as to always remain horizontal and parallel to itself. Each assembly supports a sucking holding head 4 (better illustrated in Figures 8, 9, and 10) equipped with two sucking seats 5 that are parallel and simultaneously take two cigarette segments from a double forming beam of a cigarette packaging machine; according to a different embodiment not illustrated, each holding head 4 comprises a single sucking seat 5 taking just one cigarette segment at a time from a single forming beam of a cigarette packaging machine.

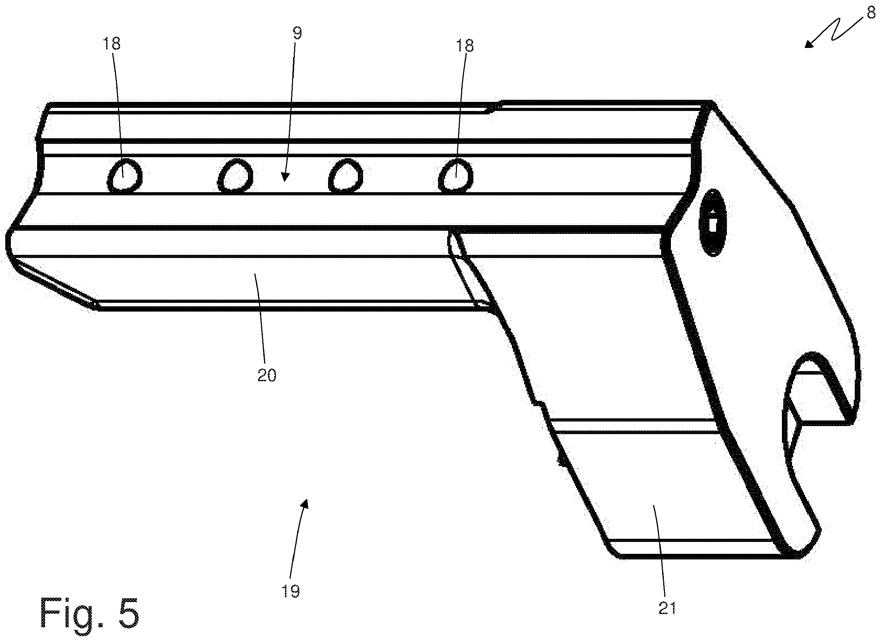

In addition, the filter application machine 1 comprises a separation drum 6, which is assembled so that it can rotate, with continuous motion, around a rotation axis 7 and supports multiple holding heads 8 (illustrated in Figures 5, 6, and 7), each of which is equipped with a single sucking seat 9 designed to hold a corresponding filter.

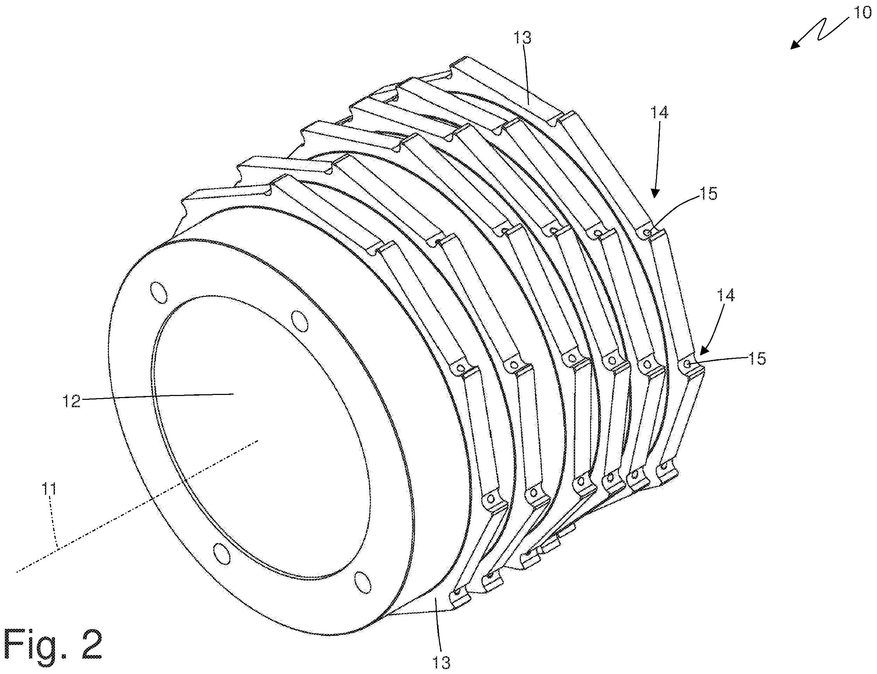

Finally, the filter application machine 1 comprises a staggering drum 10 or scaler (better illustrated in Figure 2), which is assembled so that it rotates, with continuous motion, around a rotation axis 11. The staggering drum 10 staggers two (or more) segments of cigarette filters initially placed side-by-side and with their heads circumferentially (tangentially) in contact with each other (via a circumferential movement of at least one filter segment) to arrange them at a certain circumferential distance from each other. Thus, the filter segments entering the staggering drum 10 are circumferentially aligned between them, while the filter segments exiting the staggering drum 10 are separated (staggered) circumferentially between them. In particular, the staggering drum 10 takes the filter segments from an entry station arranged at the cutting drum and feeds the circumferentially staggered filter segments to an outlet station arranged near a subsequent combining drum.

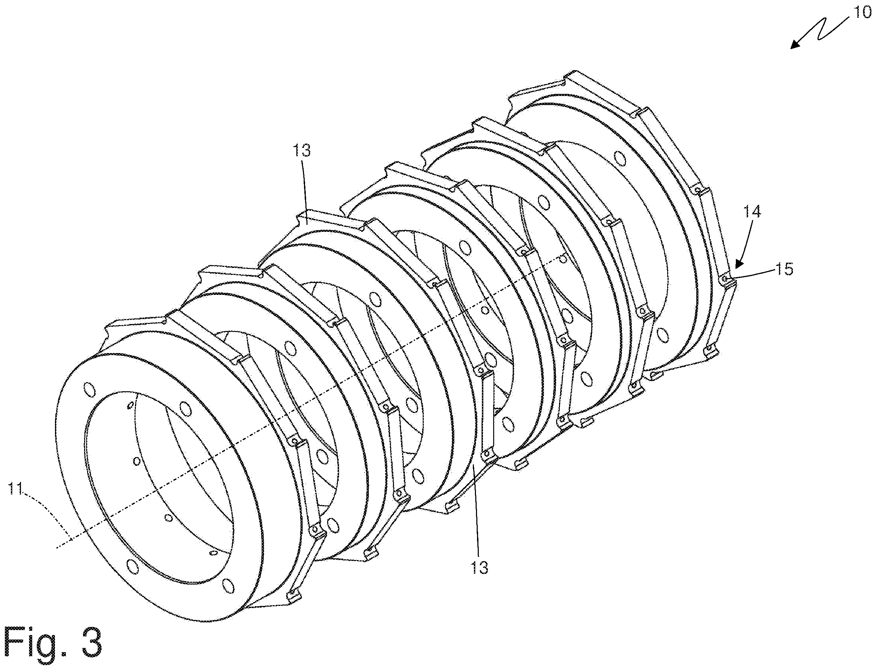

According to what is illustrated in Figures 2, 3, and 4, the staggering drum 10 comprises a central body 12 (only partially illustrated in Figure 2), which is assembled so that it can rotate around the rotation axis 11 (i.e., it is connected so that it can rotate around a frame of the filter application machine 1), and multiple operating rings 13, which are fitted, one after the other, around the central body 12 to form a shell that surrounds the central body 12 (i.e., the operating rings 13 form a shell covering the central body 12). The operating rings 13 define sucking seats 14 that are designed to hold the cigarettes and are provided with respective suction holes 15 flowing out through the outer surface of the operating rings 13. The operating rings 13 are fitted (mounted) in a removable manner on the central body 12 and, thus, can be replaced (i.e., mounted and remounted) relatively quickly.

If there is a format change, i.e. when the filter application machine 1 needs to process cigarettes of different sizes (in particular, with different diameters), it is necessary to modify the shape of the sucking seats 14 (which must reproduce, in negative, the shape of the cigarettes); this operation requires the replacement of just the operating rings 13 (in which the sucking seats 14 are formed) and does not require the replacement of the central body 12 and, thus, it is clearly faster and easier (it is significantly easier to disassemble/assemble just the operating rings 13 rather than the whole staggering drum 10). In addition, a set of spare parts for a new cigarette format is clearly more economical and compact (the operating rings 13 alone require much less material than the whole staggering drum 10). In other words, in each staggering drum 10, the corresponding central body 12 becomes a part of a standard machine totally disconnected from the smoking articles format (i.e., it is never replaced or adjusted during a format change), while the operating rings 13 alone are part of a format machine that must vary as a function of the smoking article format (i.e., they must be replaced during a format change).

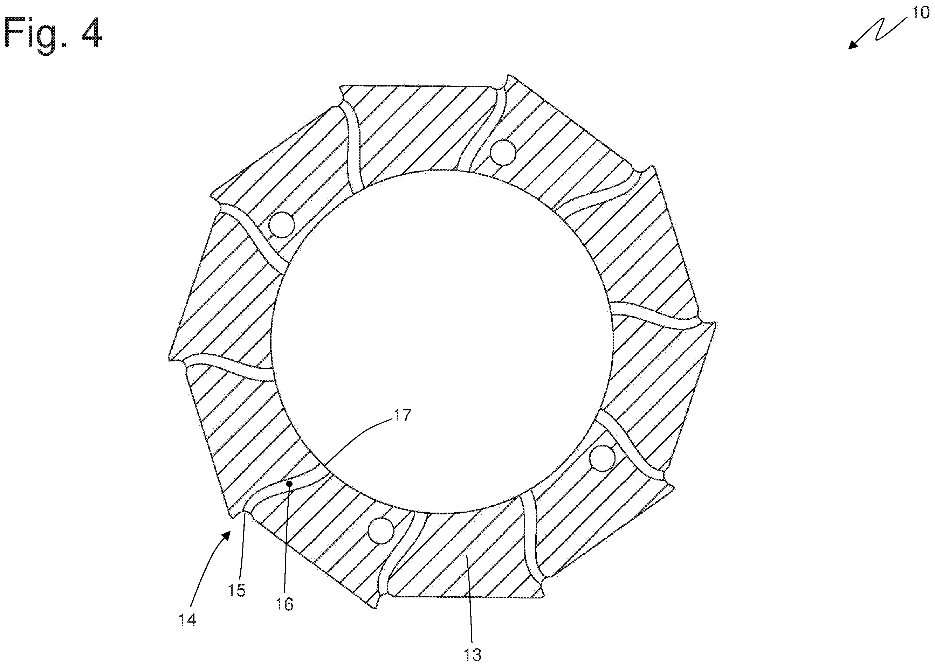

The operating machines 13 have a series of sucking seats 14 (each of which is designed to hold a cylindrical smoking article) provided with corresponding suction holes 15; in addition, and as illustrated in Figure 4, the operating rings 13 comprise a series of tubular ducts 16, each originating from an input opening 17 arranged in the area of an inner wall of an operating ring 13 and ending in a respective suction hole 15 in the area of an outer wall of the operating ring 13. In other words, each tubular duct 16 connects a pneumatic distributor formed in the central body 12 to the suction holes 15. The tubular ducts 16 are formed inside the corresponding operating rings 13.

It is important to note that the valves adjusting the suction flow are formed inside the central body 12 and, thus, they always remain the same (and, so, in the same position) for all the formats, since the central body 12 is a part of a standard machine that is not replaced during a format change; obviously, the inlet openings 17 of the tubular ducts 16 formed in the operating rings 13 are positioned so that they can be optimally coupled with the corresponding openings formed in the central body 12.

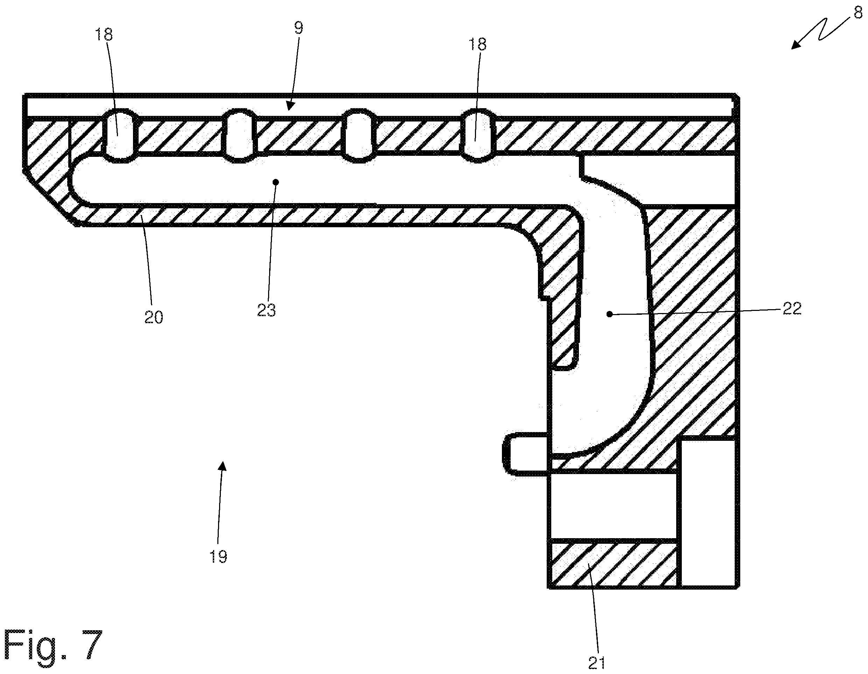

The staggering drum 10 of the filter application machine 1 circumferentially staggers the filter segments to a relatively limited degree; i.e., the circumferential movement of some filter segments in relation to other filter segments has a relatively limited stroke. In contrast, a staggering drum of a combining machine producing combined filters circumferentially staggers the filter segments to a relatively high degree (if compared to the staggering drum 10 of the filter application machine 1); i.e., the circumferential staggering of some filter segments compared to other filter segments has a relatively limited stroke (if compared to the staggering drum 10 of the filter application machine 1). In Figures 5, 6, and 7, a holding head 8 comprising a sucking seat 9 provided with multiple suction holes 18, which are connected to a suction source, is illustrated. In particular, each holding head 8 comprises a support body 19 that is L-shaped and consists of a main element 20, in which the sucking seat 19 is formed, and a connection element 21 forming a right angle with the main element 20 and is connected to the separation drum 6. According to what is illustrated in Figure 7, inside the support body 19 of each holding head 8, a tubular duct 22 is formed, which ends in the suction holes 18 and connects the suction holes 18 to a pneumatic distributor formed in the separation drum 6.

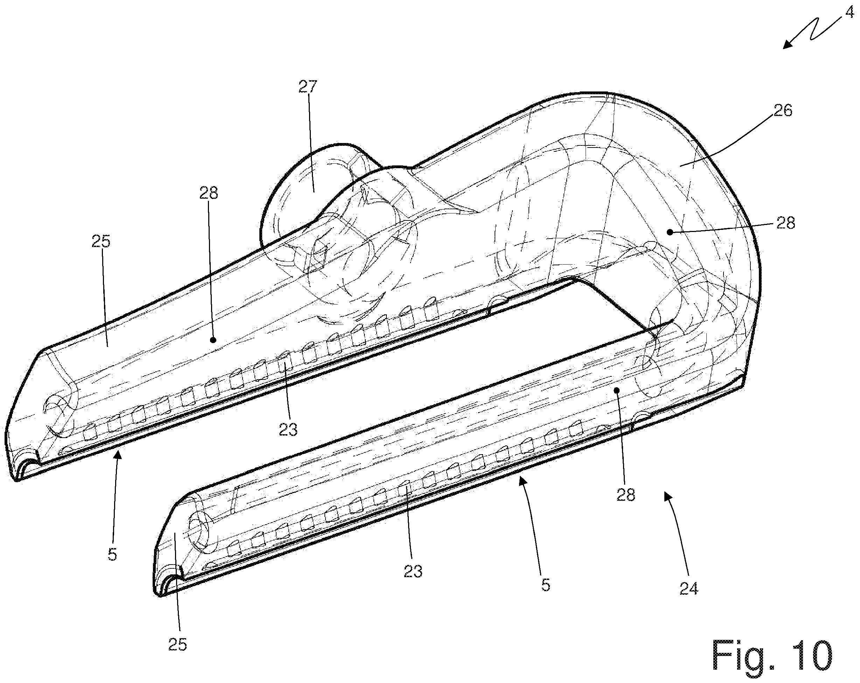

In Figures 8, 9, and 10, a holding head 4 comprising two sucking seats 5, each of which is provided with multiple suction holes 23, which are connected to a suction source, is illustrated. In particular, each holding head 4 comprises a support body 24 that is U-shaped and comprises two, straight main elements 25 parallel to each other, in which the sucking seats 5 are formed, and a connection element 26 connecting the main elements 25 together. Each main element 25 has an attachment 27 that is fixed to the transfer drum 2. According to what is illustrated in Figure 10, inside the support body 24 of each holding head 4, a tubular duct 28 is formed, which ends in the suction holes 23 and connects the suction holes 23 to a pneumatic distributor formed in the transfer drum 2.

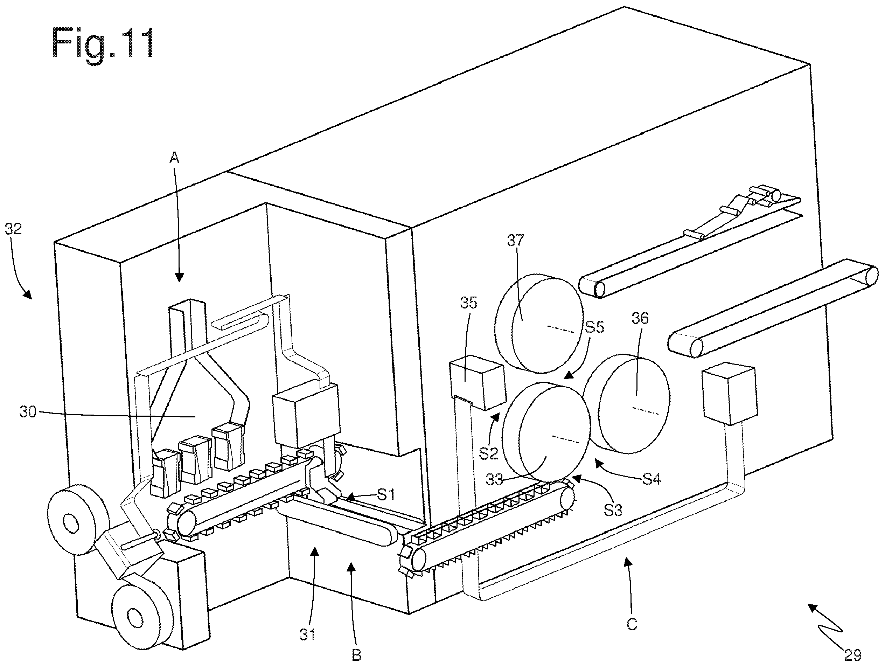

With reference to Figure 11, reference number 29 indicates, as a whole, a wrapping machine that is designed to produce a rigid cigarette pack with a hinged lid and functions with intermittent motion (i.e., motion that involves a cyclical alternation of motion and rest phases).

The wrapping machine 29 comprises a forming unit A, in which groups of cigarettes are formed in succession; a wrapping unit B, in which, around each group of cigarettes, a corresponding wrapping sheet is wrapped to create an inner wrapping; and a wrapping unit C, in which, around each inner wrapping, a collar is wrapped and a blank for creating an outer container provided with a lid.

The forming unit A of the cigarette groups comprises a hopper 30 provided with three outlet mouths for simultaneously feeding three cigarette groups to three corresponding pockets of a forming conveyor that supports multiple pockets.

The wrapping unit B comprises a wrapping conveyor 31 designed to feed each cigarette group along a straight, horizontal wrapping path. In particular, the wrapping path extends through a feeding station S1, wherein each cigarette group is coupled to a corresponding wrapping sheet that is folded in a U around the cigarette group.

The wrapping machine 29 comprises a feeding device 32 that cyclically feeds the wrapping sheets into the feeding station S1, i.e., it arranges each wrapping sheet in the feeding station S1 so that the wrapping sheet is intercepted by a corresponding cigarette group that advances along the wrapping path.

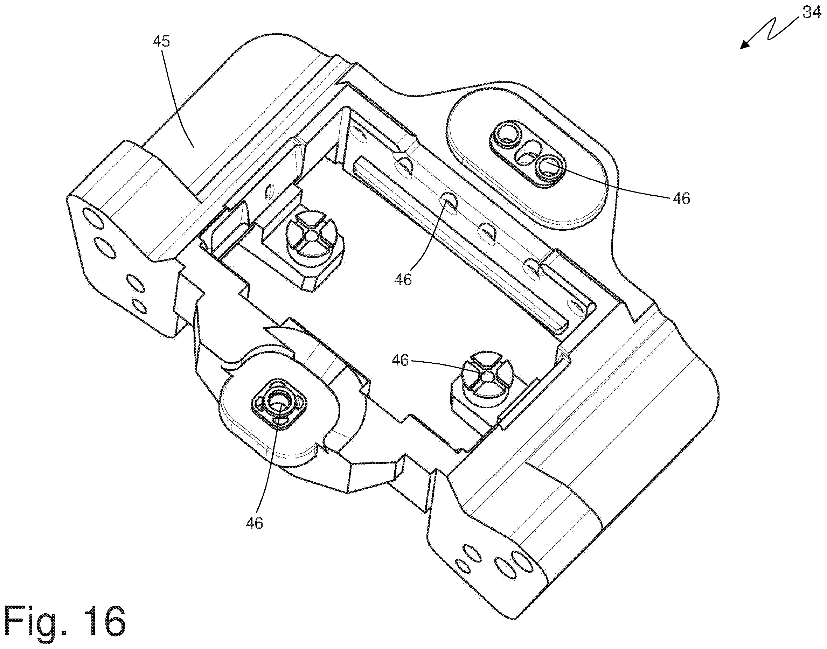

The wrapping machine 29 comprises a wrapping drum 33, which supports multiple pockets 34 (one of which is illustrated in Figure 16), each of which is designed to contain an inner wrapping and a collar, and is assembled so that it rotates (with intermittent motion, i.e., *"in steps"*) around a horizontal, parallel rotation axis. Each pocket 34 of the wrapping drum 33 receives a collar at a feeding station S2, thus receiving an inner wrapping at a transfer station S3, subsequently it receives a blank at a feeding station S4, and transfers the inner wrapping, the collar, and the blank together at a transfer station S5.

The wrapping machine 29 comprises a feeding device 35 that cyclically feeds the collars in the feeding station S2, i.e., arranges each collar opposite a pocket 34. In the embodiment illustrated in Figure 1, the feeding device 35 separates the collars from a continuous band via a transverse cut; alternatively, the feeding device 35 could feed the collars from the hopper.

The wrapping machine 29 comprises a feeding drum 36 that supports multiple sucking holding heads (not illustrated), each of which is designed to hold a corresponding blank, and is assembled so that it rotates (with intermittent motion, i.e., *"in steps")* around a horizontal rotation axis to feed each sucking holding head along a circular feeding path. Finally, the wrapping machine 29 comprises a wrapping drum 37 that is arranged downstream of the other wrapping drum 33, it supports multiple pockets, each of which is designed to contain an inner wrapper, a collar, and a blank (received from the wrapping drum 33 in the transfer station S5), and it is assembled so that it rotates (with intermittent motion, i.e., *"in steps"*) around a horizontal rotation axis.

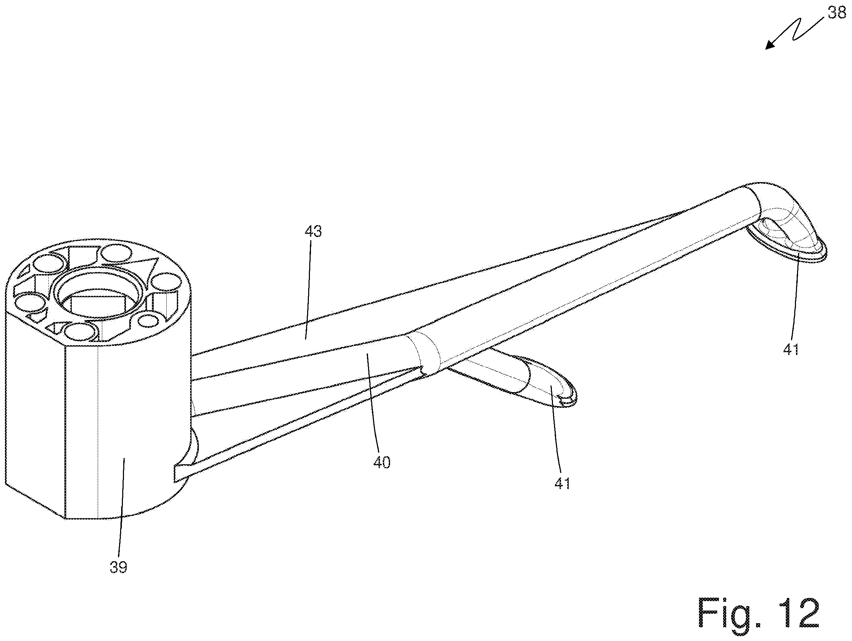

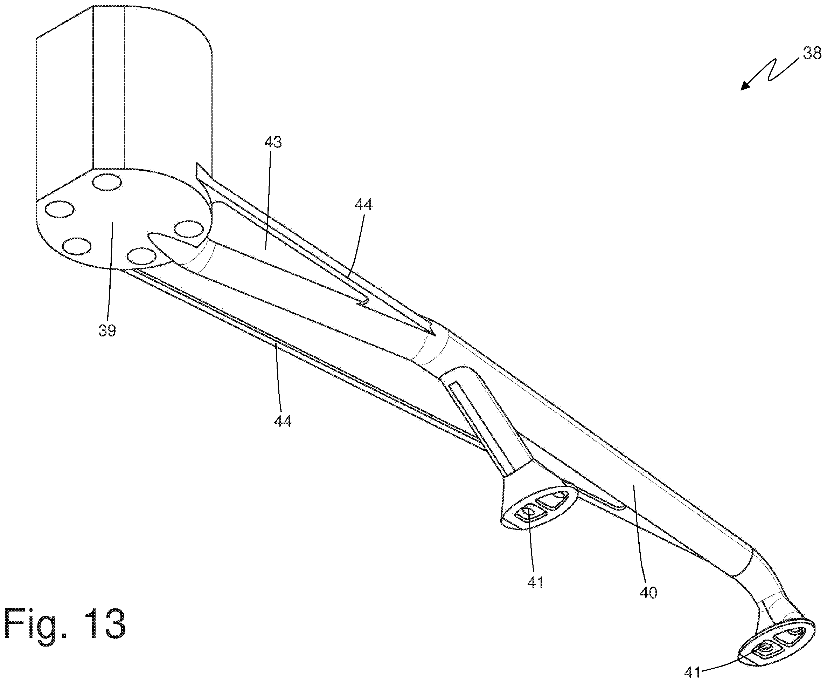

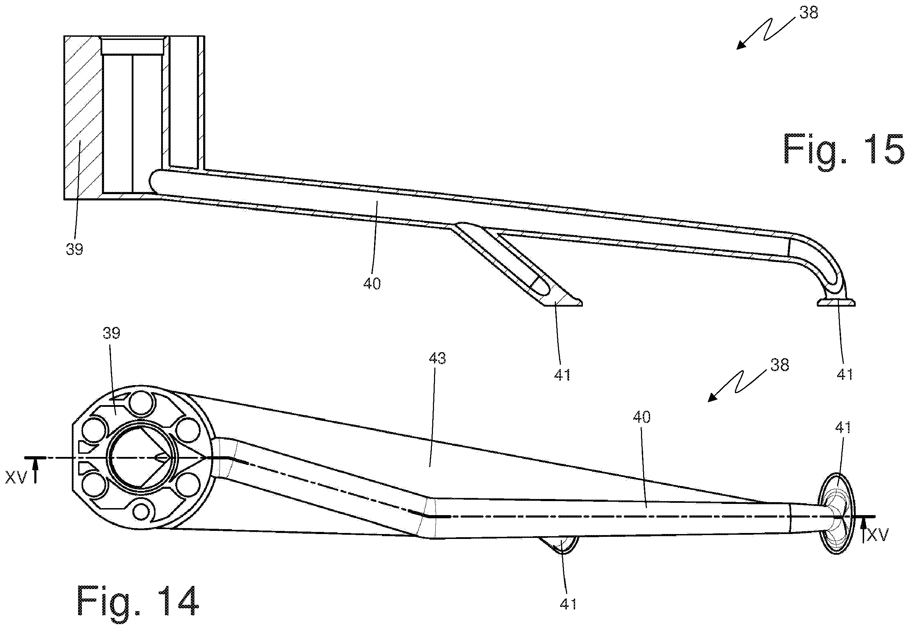

The feeding device 35 comprises a movable support (not illustrated) that supports an individual sucking holding head 38 (illustrated in Figures 12-15) designed to hold a corresponding collar; in particular, the movable support cyclically moves the holding head 38 forward and backwards between a collar removal station and a collar delivery station.

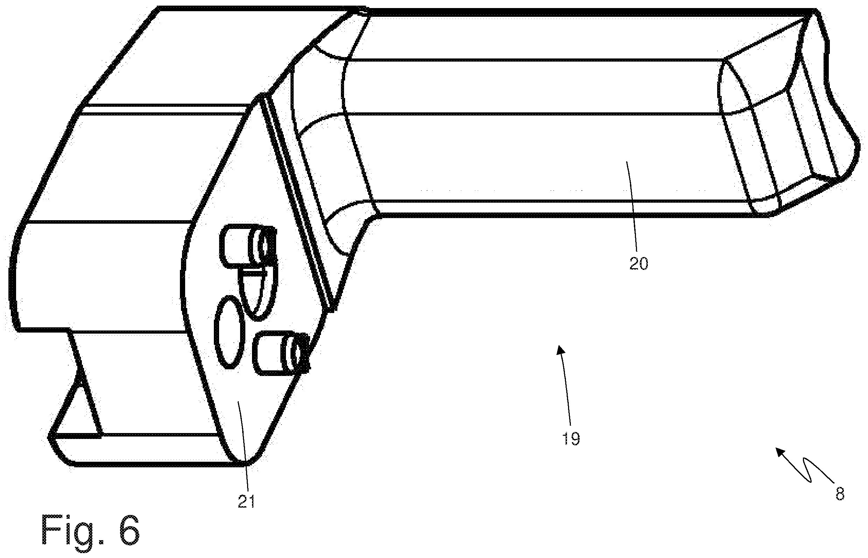

According to what is illustrated in Figures 12-15, each sucking holding head 38 comprises a cylindrical connection body 39, which is connected to the feeding drum (not illustrated), and a tubular duct 40 projecting from a side surface of the connection body 39, it is perpendicular to a longitudinal axis of the connection body 39, and ends in two holding portions 41, each of which is provided with (at least) one suction hole 42. In other words, in the final part, each tubular duct 40 branches out in two sections, each of which ends in a corresponding holding portion 41. The two holding portions 41 of the same tubular duct 40 are arranged at a certain distance from each other, to engage corresponding portions of a collar so as to grasp the collar safely and stably (i.e., without the collar being free to be deformed in an uncontrolled manner during the manipulation thereof). According to a different embodiment not illustrated, each tubular duct 40 only ends in an individual holding portion 41 or it ends in three-four holding portions 41 separated from each other. Each sucking holding head 38 comprises a flat reinforcement element 43, which is arranged alongside the tubular duct 40, is radially oriented (perpendicularly) in relation to the tubular duct 40, is connected to the tubular duct 40 at a middle line of the tubular duct 40, and projects from a side surface of the connection body 39. According to what is illustrated in the attached figures, in each holding head 38, the reinforcement element 43 is initially arranged (i.e., in a part near the connection body 39) on both sides of the tubular duct 40 and is subsequently arranged (i.e., in a part that is distal to the connection body 39) on one side of the tubular duct 40 only. In each holding head 38, the reinforcement element 43 preferably has an outer edge 44 (visible in Figure 6), which is oriented perpendicularly to the reinforcement element 43 and confers greater stiffness against buckling.

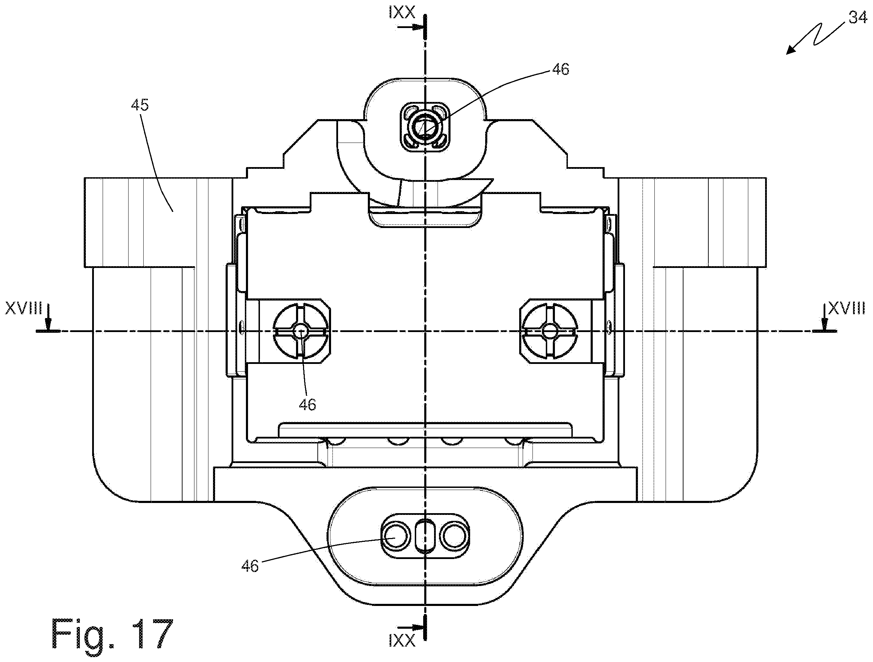

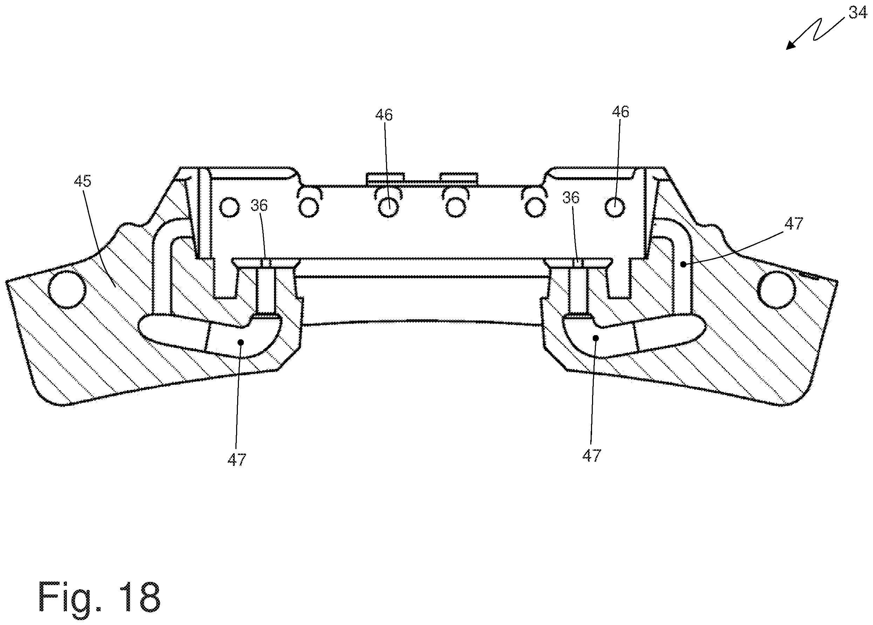

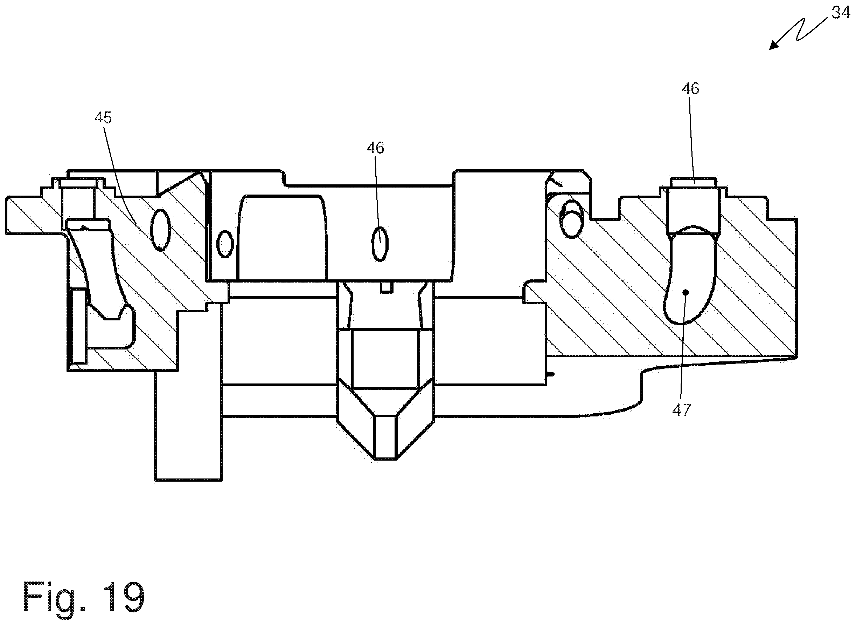

It is important to underline how the tubular duct 40 does not only have the function of *"suction conveyor"* passively supported by the reinforcement element 43, but also performs an important structural function being a genuine reinforcement rib of the base element 25. In other words, the reinforcement element 43 alone would not be able to withstand the mechanical stresses to which it is subject in use, since only the reinforcement element 43 together with the tubular duct 40 (which substantially reinforces the reinforcement element 43) is able to withstand the mechanical stresses to which it is subject in use. In other words, in the mechanical sizing of a holding head 38, the tubular duct 40 performs an important function and, thus, in use the tubular duct 40 supports a significant part of the mechanical stresses to which the holding head 38 is subject. As a result, the tubular duct 40 is (partially) able to support itself, i.e., it also has an important structural function and is not, therefore, only used as a *"suction conveyor".* According to what is illustrated in Figures 16-19, each pocket 34 of the wrapping drum 11 comprises a rectangular peripheral frame 45 that is entirely solid and delimits a cavity arranged at the centre. In other words, the peripheral frame 45 is rectangular and extends in a ring around the cavity arranged at the centre. Each pocket 34 is a suction pocket and comprises multiple sucking holes 46, flowing out through an outer surface of the peripheral frame 45 and, in use, they have the function of holding a corresponding collar and blank inside the pocket 34. In addition, each pocket 34 comprises a series of tubular ducts 47 (illustrated in Figures 18 and 19) ending in the sucking holes 46 and extending inside the peripheral frame 45, i.e., they are formed inside the hollow peripheral frame 45, avoiding depositing the material at the tubular ducts 47.

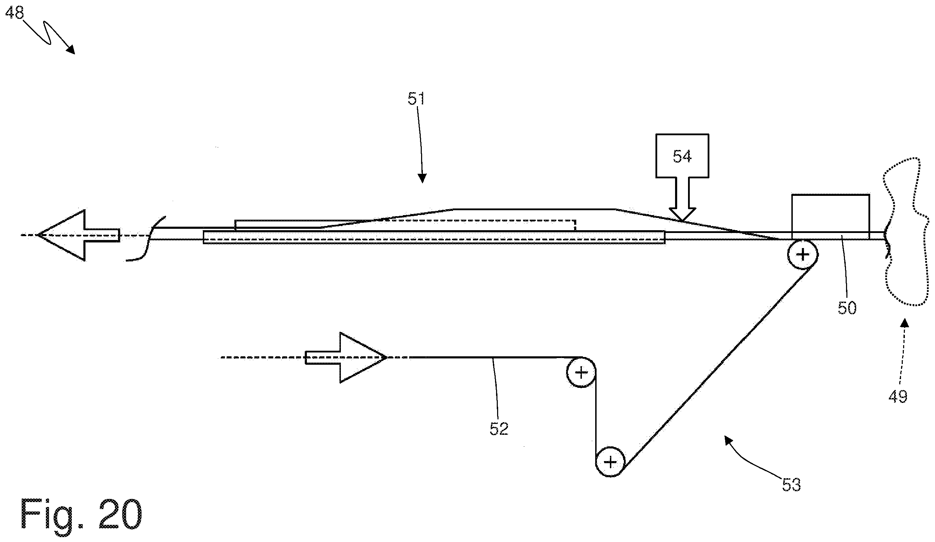

In Figure 20, reference number 48 indicates, as a whole, a packaging machine for the production of smoking articles (such as cigarettes containing tobacco) or of parts of smoking articles (for example, filters for conventional cigarettes and for new-generation cigarettes).

The packaging machine 48 comprises a preparation unit 49, in which a continuous cylinder 50 (worm) of filtering material (or tobacco) is produced in a known way, and a forming beam 51, in which a paper band 52 (or another container material) is wound around the continuous cylinder 49 in a tube fed by a feeding unit 52. In other words, the continuous cylinder 50 is fed at the inlet of the forming beam 51 above the paper band 52, which is successively folded along the forming beam 51 into a tube around the cylinder 50.

The packaging machine 1 comprises a gumming device 54, which is arranged at a gumming station arranged at the start of the forming beam 51 in an area wherein the paper band 52 has not yet been folded in a tube around the cylinder 50. Before completely folding the paper band 52 in a tube, the gumming device 54 applies a continuous strip of glue to one edge of the paper band 52.

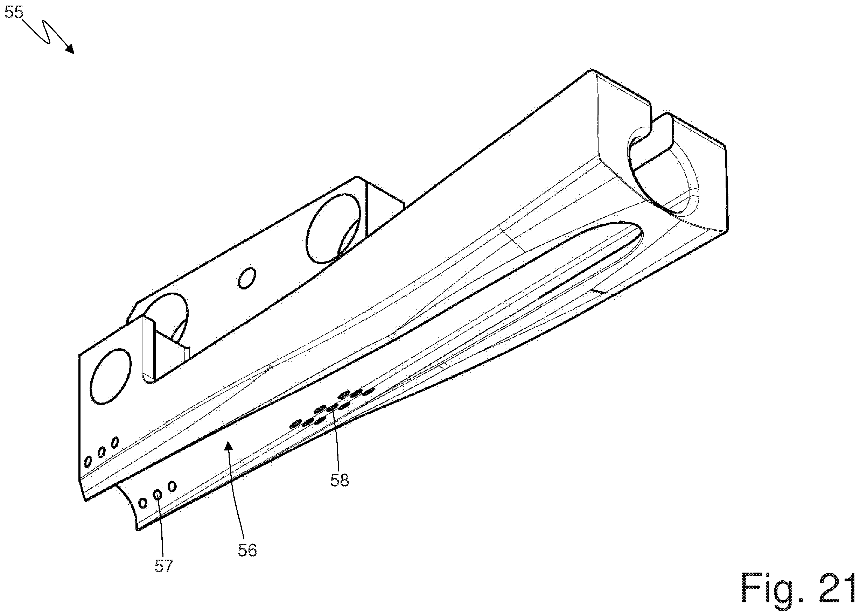

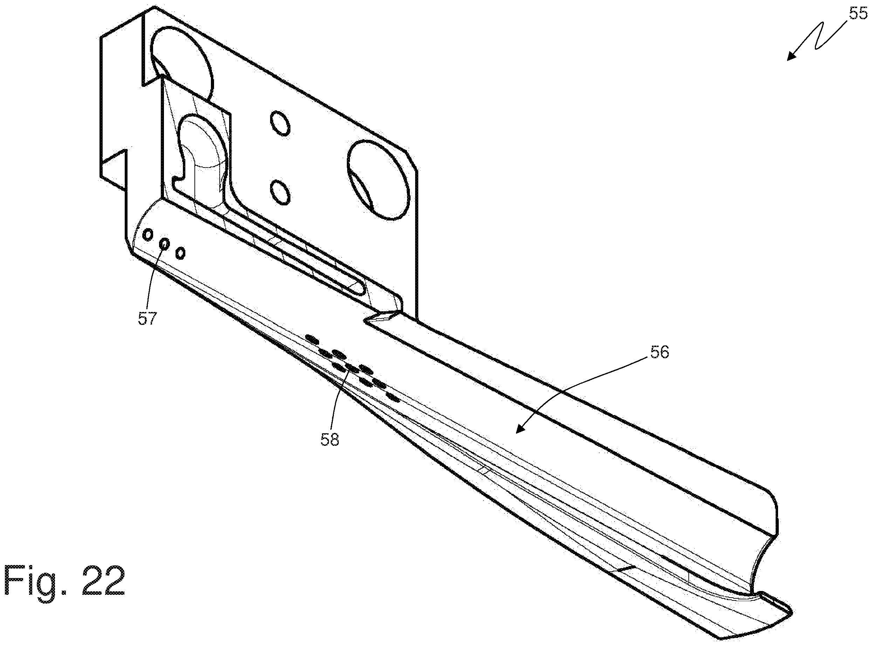

In Figures 21 and 22, an initial part 55 of the forming beam 51 is illustrated (identified in the jargon with the name *"tongue"*)*,* which has, inside, a cylindrical passage channel 56 inside of which the continuous cylinder 50 slides, partially wound by the paper band 52. Along one surface of the passage channel 56 a series of blowing holes 57 opens (three on the left side and three on the right side) and another series of blowing holes 58 (nine on the left side and nine on the right side). Inside the initial part 55 of the forming beam 51, tubular ducts are formed, which flow into the blowing holes 57 and other tubular ducts, which flow into the other blowing holes 58.

The holding heads 4, the holding heads 8, and the operating rings 13 of the filter application machine 1, the holding heads 38 and the pockets 34 of the wrapping machine 29, and the initial part 55 of the forming beam 51 of the packaging machine 48 are examples of pneumatic components of an operating machine for processing smoking articles that are advantageously produced using additive manufacturing. In other words, each pneumatic component (holding head 4, holding head 8, operating ring 13, holding head 38, pocket 34, and initial part 55) is a single monolithic piece, it is composed of a single, indivisible body made all together and entirely seamlessly, and is manufactured using additive manufacturing.

Each pneumatic component is made using additive manufacturing (also called 3D printing), i.e., using an industrial process that, beginning with a digital 3D model, creates the piece adding one layer over the other (some examples of technologies that can be used in additive manufacturing are stereolithography; fusion deposition modelling, also called FDM; selective laser sintering, also called SLS; or direct laser microfusion or DLM). According to one possible embodiment, each pneumatic component (holding head 4, holding head 8, operating ring 13, holding head 38, pocket 34, initial part 55) is entirely made of plastic (plastic or resin), i.e., not of metal (basically to reduce the cost of production and the weight), since each pneumatic component in use is not subject to significant mechanical stresses. The plastic with which each pneumatic component is made, could, potentially, be filled (reinforced) with carbon or glass to improve the structural characteristics (for example Nylon 12CF is a thermoplastic composite for carbon-filled 3D printing with excellent structural characteristics).

According to a different embodiment, each pneumatic component (holding head 4, holding head 8, operating ring 13, holding head 38, pocket 34, or initial part 55) is entirely made of metal (for example, steel or aluminium), which has greater resistance to wear. In all the pneumatic components (holding head 4, holding head 8, operating ring 13, holding head 38, pocket 34, initial part 55) described above, the use of additive manufacturing (which makes each component a single undivided and indivisible body) makes it possible to optimise the fluid dynamic efficiency of the corresponding tubular ducts 16, 22, 28, 40, 47 since the tubular ducts 16, 22, 28, 40, 47 may have irregular shapes (typically with curves that form an angle very different to 90° and/or with a variable cross section area) chosen to optimise the fluid dynamic efficiency (i.e., without taking into account in any way the construction and assembly issues that there would be if additive manufacturing were not used). In particular, along the same section of a tubular duct, the area of the cross-section may continuously vary (i.e., without forming *"steps"*) in order to optimise the fluid dynamic efficiency.

In other words, the use of additive manufacturing makes it possible to transfer the shape of the tubular ducts 16, 22, 28, 40, 47 calculated using a fluid dynamic numerical analysis, to all the pneumatic components (holding head 4, holding head 8, operating rings 13, holding head 38, pocket 34, initial part 55) described above, in order to balance air flows, minimising losses, distributing the up thrust forces of the product in the most efficient manner along the whole length of the holding section.

In addition, the use of additive manufacturing (which makes each pneumatic component a single undivided and indivisible body) makes it possible to create tubular ducts 16, 22, 28, 40, 47 directly inside the pneumatic component without the pneumatic component being dismountable (i.e., somehow able to be opened). Thus, it is no longer necessary that a pneumatic component be composed of several pieces joined together, and the tubular ducts 16, 22, 28, 40, 47 may have irregular shapes chosen only to optimise the fluid dynamic efficiency (i.e., without taking into account the construction and assembly issues that there would be if additive manufacturing were not used). The operating machine described above has numerous advantages.

In the first place, the pneumatic components (holding head 4, holding head 8, operating ring 13, holding head 38, pocket 34, initial part 55) of the operating machine described above have a fluid dynamics that is optimised to minimise charge losses and, thus, maximise energy efficiency (i.e., the use of moderate power is enough to produce a suction or blowing and, thus, less energy is consumed).

In addition, the optimised fluid dynamics of the pneumatic components (holding head 4, holding head 8, operating ring 13, holding head 38, pocket 34, initial part 55) of the operating machine described above improves (i.e., makes more stable and secure) how materials and products are held, increasing the final quality of products and reducing the number of defective products to be thrown away.

Finally, the production of the operating machine described above is especially simple and economical in that the pneumatic components (holding head 4, holding head 8, operating ring 13, holding head 38, pocket 34, initial part 55) of the operating machine described above may be manufactured quickly and inexpensively thanks to additive manufacturing.

## Claims

1. An operating machine (29) to process smoking articles and comprising at least one pneumatic component having a plurality of holes (46), which are obtained through an outer surface and can be connected to a pneumatic system, and at least one tubular duct (47), which ends in the holes (46);
wherein the pneumatic component is one single monolithic piece, consists of one single indivisible body manufactured as a whole seamlessly and is manufactured by means of additive manufacturing;
wherein the tubular duct (47) has a non-straight geometry, which optimizes fluid-dynamic efficiency; and
wherein the pneumatic component is a pocket (34) of a wrapping drum (33).

2. The operating machine (29) according to claim 1, wherein the tubular duct (47) is obtained from the solid part inside the pneumatic component.

3. The operating machine (29) according to claim 1 or 2, wherein the tubular duct (47) has curves forming an angle other than 90° and/or has a variable cross section area.

4. The operating machine (29) according to claim 1, 2 or 3, wherein the pocket (34) comprises a peripheral frame (45) with a rectangular shape, which delimits a cavity arranged at the centre.

5. The operating machine (29) according to claim 4, wherein the peripheral frame (45) is rectangular and extends in a ring around the cavity arranged at the centre.

6. The operating machine (29) according to claim 4 or 5, wherein each pocket (34) is a suction pocket and comprises multiple sucking holes (46), flowing out through an outer surface of the peripheral frame (45).

7. The operating machine (29) according to claim 6, wherein each pocket (34) comprises a series of tubular ducts (47) ending in the sucking holes (46) and extending inside the peripheral frame (45),

8. The operating machine (29) according to claim 7, wherein the tubular ducts (47) are formed inside the hollow peripheral frame (45), avoiding depositing the material at the tubular ducts (47).

9. A method for the production of a pneumatic component of an operating machine (29) to process smoking articles;
wherein the pneumatic component has a plurality of holes (46), which are obtained through an outer surface and can be connected to a pneumatic system, and at least one tubular duct (47), which ends in the holes (46);
wherein the pneumatic component is one single monolithic piece, consists of one single indivisible body manufactured as a whole seamlessly and is manufactured by means of additive manufacturing;
wherein the tubular duct (47) has a non-straight geometry, which optimizes fluid-dynamic efficiency; and
wherein the pneumatic component is a pocket (34) of a wrapping drum (33).

## Patentansprüche

1. Arbeitsmaschine (29) zum Verarbeiten von Rauchartikeln und umfassend wenigstens eine Pneumatik-Komponente, die mehrere Löcher (46) aufweist, die durch eine Außenfläche erhalten werden und mit einem Pneumatik-System verbunden werden können, und wenigstens einen rohrförmigen Kanal (47), der in den Löchern (46) endet;
wobei die Pneumatik-Komponente ein einzelnes monolithisches Stück ist, aus einem einzelnen nicht teilbaren Körper besteht, der nahtlos als Ganzes gefertigt ist und mittels additiver Herstellung hergestellt ist;
wobei der rohrförmige Kanal (47) eine nicht geradlinige Geometrie aufweist, die Fluiddynamik-Effizienz optimiert; und
wobei die Pneumatik-Komponente eine Tasche (34) einer Einwickeltrommel (33) ist.

2. Arbeitsmaschine (29) nach Anspruch 1, wobei der rohrförmige Kanal (47) aus dem massiven Teil im Inneren der Pneumatik-Komponente erhalten ist.

3. Arbeitsmaschine (29) nach Anspruch 1 oder 2, wobei der rohrförmige Kanal (47) Krümmungen, die einen von 90° verschiedenen Winkel bilden, aufweist und/oder eine variable Querschnittsfläche aufweist.

4. Arbeitsmaschine (29) nach Anspruch 1, 2 oder 3, wobei die Tasche (34) einen Umfangsrahmen (45) mit einer rechteckigen Form, der einen in der Mitte angeordneten Hohlraum begrenzt, umfasst.

5. Arbeitsmaschine (29) nach Anspruch 4, wobei der Umfangsrahmen (45) rechteckig ist und in einem Ring um den in der Mitte angeordneten Hohlraum verläuft.

6. Arbeitsmaschine (29) nach Anspruch 4 oder 5, wobei jede Tasche (34) eine Ansaugtasche ist und mehrere Sauglöcher (46), die durch eine Außenseite des Umfangsrahmens (45) auslaufen, umfasst.

7. Arbeitsmaschine (29) nach Anspruch 6, wobei jede Tasche (34) eine Reihe von rohrförmigen Kanälen (47) umfasst, die in den Sauglöchern (46) enden und im Inneren des Umfangsrahmens (45) verlaufen.

8. Arbeitsmaschine (29) nach Anspruch 7, wobei die rohrförmigen Kanäle (47) im Inneren des hohlen Umfangsrahmens (45) gebildet sind, um Ablagern des Materials in den rohrförmigen Kanälen (47) zu vermeiden.

9. Verfahren zur Herstellung einer Pneumatik-Komponente einer Arbeitsmaschine (29) zum Verarbeiten von Rauchartikeln;
wobei die Pneumatik-Komponente mehrere Löcher (46), die durch eine äußere Oberfläche erhalten werden und mit einem Pneumatik-System verbunden werden können, und wenigstens einen rohrförmigen Kanal (47), der in den Löchern (46) endet, umfasst;
wobei die Pneumatik-Komponente ein einzelnes monolithisches Stück ist, aus einem einzelnen nicht teilbaren Körper besteht, der nahtlos als Ganzes gefertigt ist und mittels additiver Herstellung hergestellt ist;
wobei der rohrförmige Kanal (47) eine nicht geradlinige Geometrie hat, die fluiddynamische Effizienz optimiert; und
wobei die Pneumatik-Komponente eine Tasche (34) einer Einwickeltrommel (33) ist.

## Revendications

1. Machine d'exploitation (29) pour traiter des articles à fumer et comprenant au moins un composant pneumatique ayant une pluralité de trous (46), qui sont obtenus à travers une surface externe et peuvent être raccordés à un système pneumatique, et au moins un conduit tubulaire (47), qui se termine dans les trous (46) ;
dans laquelle le composant pneumatique est une unique pièce monolithique, est constitué d'un unique corps indivisible fabriqué dans son ensemble sans soudure et est fabriqué au moyen d'une fabrication additive ;
dans laquelle le conduit tubulaire (47) possède une géométrie non rectiligne, ce qui optimise l'efficacité de la dynamique des fluides ; et
dans laquelle le composant pneumatique est une poche (34) d'un tambour d'enveloppement (33).

2. Machine d'exploitation (29) selon la revendication 1, dans laquelle le conduit tubulaire (47) est obtenu à partir de la partie solide à l'intérieur du composant pneumatique.

3. Machine d'exploitation (29) selon la revendication 1 ou 2, dans laquelle le conduit tubulaire (47) possède des courbes formant un angle autre que 90° et/ou possède une aire de section transversale variable.

4. Machine d'exploitation (29) selon la revendication 1, 2 ou 3, dans laquelle la poche (34) comprend un cadre périphérique (45) ayant une forme rectangulaire, qui délimite une cavité agencée au centre.

5. Machine d'exploitation (29) selon la revendication 4, dans laquelle le cadre périphérique (45) est rectangulaire et s'étend selon un anneau autour de la cavité agencée au centre.

6. Machine d'exploitation (29) selon la revendication 4 ou 5, dans laquelle chaque poche (34) est une poche d'aspiration et comprend de multiples trous (46) d'aspiration, s'écoulant en sortie à travers une surface externe du cadre périphérique (45).

7. Machine d'exploitation (29) selon la revendication 6, dans laquelle chaque poche (34) comprend une série de conduits tubulaires (47) se terminant dans les trous (46) d'aspiration et s'étendant à l'intérieur du cadre périphérique (45).

8. Machine d'exploitation (29) selon la revendication 7, dans laquelle les conduits tubulaires (47) sont formés à l'intérieur du cadre périphérique (45) creux, ce qui évite un dépôt de la matière au niveau des conduits tubulaires (47).

9. Méthode pour la production d'un composant pneumatique d'une machine d'exploitation (29) pour traiter des articles à fumer ;
dans laquelle le composant pneumatique possède une pluralité de trous (46), qui sont obtenus à travers une surface externe et peuvent être raccordés à un système pneumatique, et au moins un conduit tubulaire (47), qui se termine dans les trous (46) ;
dans laquelle le composant pneumatique est une unique pièce monolithique, est constitué d'un unique corps indivisible fabriqué dans son ensemble sans soudure et est fabriqué au moyen d'une fabrication additive ;
dans laquelle le conduit tubulaire (47) possède une géométrie non rectiligne, ce qui optimise l'efficacité de la dynamique des fluides ; et
dans laquelle le composant pneumatique est une poche (34) d'un tambour d'enveloppement (33).
